**Europäisches Patentamt**

**European Patent Office**

**Office européen des brevets**

(19)

(11) Veröffentlichungsnummer: **0 035 216**
A2

(12) ## EUROPÄISCHE PATENTANMELDUNG

(21) Anmeldenummer: 81101309.3

(22) Anmeldetag: 24.02.81

(51) Int. Cl.³: **F 25 B 39/02,** F 28 F 1/22, C 25 D 1/00 // F24J3/02

(30) Priorität: 04.03.80 DE 3008126

(43) Veröffentlichungstag der Anmeldung: **09.09.81 Patentblatt 81/36**

(84) Benannte Vertragsstaaten: **CH DE FR GB LI**

(71) Anmelder: **Kernforschungsanlage Jülich Gesellschaft mit beschränkter Haftung, Postfach 1913, D-5170 Jülich (DE)**

(72) Erfinder: **Hemmerich, Johann, Dr., Otto-Hahn-Strasse 4, D-5170 Jülich (DE)**

(54) **Kaltfläche für Kryopumpen und Verfahren zur Herstellung derselben.**

(57) Eine Kryopumpen-Kaltfläche mit geringer Wärmeträgheit, die bedeutend weniger flüssiges Helium benötigt als bekannte Kaltflächen, wird gemäß der Erfindung durch eine Serie von untereinander in Verbindung stehenden dünnwandigen Röhrchen (1) gebildet, an die sich jeweils gut wärmeleitende Metallamellen (6) anschließen, die vorzugsweise untereinander verbunden eine gegebenenfalls gelochte zusammenhängende Fläche bilden. Dabei sind Röhrchendurchmesser, -abstand und -wandstärke sowie Lamellendicke aufeinander abgestimmt und so bemessen, daß die Temperaturunterschiede innerhalb der Lamellen der von flüssigem Helium durchströmten bzw. damit gefüllten Röhrchen bei max. auftretender Wärmebelastung der Fläche unter 0,1 °C bleiben. Die Herstellung solcher Kaltflächen erfolgt insbesondere durch galvanische Abscheidung.

- 1 -

Kaltfläche für Kryopumpen und Verfahren zur
Herstellung derselben

Die Erfindung bezieht sich auf eine Kaltfläche
für Kryopumpen in Form einer mit flüssigem Kältemittel beaufschlagten (gefüllten/durchströmten)
(Doppel)-Wand sowie auf ein Verfahren zur Herstellung einer solchen Kalt-fläche. Sie bezieht
sich insbesondere auf Kaltflächen für He-Kryopumpen.

- 2 -

0035216

Kaltflächen für Kryokondensations- oder Kryosorptionspumpen werden bislang üblicherweise ausgehend von zwei aufeinanderliegenden ebenen Blechen hergestellt, die durch punkt- oder linienförmige Rollnahtverschweißungen miteinander verbunden werden. Nach umlaufender vakuumdichter Verschweißung der Ränder nach üblichen Verfahren wird der Raum zwischen den Blechen mit Druck beaufschlagt beziehungsweise aufgeblasen, so daß ein flacher Hohlkörper mit einem dem Verwendungszweck entsprechenden Muster an Kanälen entsteht. Dieser Hohlkörper wird bei Verwendung als Kaltfläche mit dem Kältemittel (flüssigem Helium oder Stickstoff) gefüllt.

Solche in der üblichen Weise als kältemittel-beaufschlagte Doppelwände ausgeführten Kaltflächen haben bei größeren Pumpen ein ganz erhebliches Gewicht (in der Größenordnung von 1o $kg/m^2$) und Füllvolumen (typischerweise um 5 bis 1o $l/m^2$) und erfordern daher zur Füllung und Abkühlung relativ viel (teures) Kältemittel, dessen Verbrauch aus Gründen der Wirtschaftlichkeit bei ausreichender Kühlwirkung möglichst geringgehalten werden sollte.

Der Erfindung liegt daher die Aufgabe zugrunde, eine Kaltfläche vorzusehen, deren Kältemittelverbrauch möglichst niedrig ist und die ferner eine geringe Wärmeträgheit aufweist und insbesondere auch ein günstiges Verhalten bei intensiver Neutroneneinstrahlung zeigt.

Die erfindungsgemäße Kaltfläche, mit der diese Aufgabe gelöst wird, ist im wesentlichen dadurch gekennzeichnet, daß die (Doppel)-Wand durch eine Serie von untereinander in Verbindung stehenden dünnwandigen engen Röhrchen gebildet wird, an die sich jeweils dünne achsparallele gut wärmeleitende Metallamellen anschließen, wobei Röhrchendurchmesser, -abstand und -wandstärke sowie die Lamellendicke im Hinblick auf eine Minimalisierung der Gesamtmasse der Fläche aufeinander abgestimmt und so bemessen sind, daß die Temperaturunterschiede innerhalb der Lamellen der mit flüssigem Kältemittel beaufschlagten Fläche bei maximal auftretender Wärmebelastung derselben unter $0,1\,^{\circ}K$ bleiben.

Das heißt, gemäß der Erfindung wird die insbesondere He-gekühlte Kaltfläche einer Kryopumpe, die bislang entweder aus relativ kompakten Aluminiumprofilen oder in der einleitend skizzierten Weise durch ein punktverschweißtes aufgeblasenes Doppelblech mit Blechstärken um 1 mm realisiert wurde, in eine Folge dünner Röhrchen aufgegliedert, deren Wärmeaufnahmevermögen durch daran anschließende gut wärmeleitende Lamellen verstärkt wird, die nicht unbedingt zu einer in sich geschlossenen Fläche vereinigt sein müssen.

Die Dimensionierung dieser Röhrchen und Lamellen soll dabei unter Beachtung der gesetzten Festigkeitsgrenzen und Wärmeleitfähigkeiten der Materialien so gewählt werden, daß die Kaltfläche möglichst wenig Material umfaßt und der Heliumdurchsatz der anfallenden Wärmebelastung durch zu pumpendes Gas oder thermische Belastungen wie Bestrahlungen, insbesondere intensive Neutroneneinstrahlung, angepaßt werden kann.

Vorzugsweise liegen daher die Röhrchendurchmesser zwischen etwa 3 und 8 mm, der Röhrchenabstand zwischen etwa 15 oder 5o mm, die Wandstärke der Röhrchen in der Gegend von o,1 bis o,5 mm und die Lamellendicke bei etwa o,o5 bis o,5 mm. Typischerweise können für eine Wärmebelastung der Fläche von o,5 Watt/m$^2$ Röhrchen mit einem Durchmesser von 6 mm und einer Wandstärke von o,1 mm mit einem Abstand von 4o mm und eine Lamellendicke von etwa 5o bis 1oo $\mu$m vorgesehen werden.

Dabei sollte der Art der Wärmebelastung Aufmerksamkeit geschenkt werden, das heißt, bei intensiver Neutronenstrahlung sollte die Kaltfläche im Hinblick auf ein möglichst geringes Füllvolumen optimiert werden.

Vorzugsweise sind die engen Röhren durch je eine Verteiler- und Sammelleitung miteinander verbunden, und die Metallamellen bilden insbesondere Verbindungsstege zwischen Parallelröhren, so daß eine in sich zusammenhängende (gegebenenfalls zusätzlich gelochte) Fläche entsteht, die in die Pumpenkonstruktion einbezogen an einem Träger aufgehängt oder befestigt sein kann.

Die erfindungsgemäß vorgesehenen engen Röhren können im Vergleich zu den bekannten aufgeblasenen Hohlkörpern relativ dünnwanding sein, so daß sich größenordnungsmäßig Materialeinsparungen um mindestens 9o% ergeben. Die Materialeinsparung ist gleichbedeutend mit einer Verringerung der Wärmekapazität der gesamten Kaltfläche, wodurch die Wärmeträgheit gering und insbesondere der Kühlmittelverbrauch bei wiederholter Zwischenerwärmung (z.B. zur Kondensatentfernung) bedeutend verringert ist, ohne daß jedoch die Kühlwirkung der Wand beeinträchtigt wird.

Neben dieser Verringerung des Energieaufwandes für die Abkühlung und Füllung der Kaltfläche ergibt sich für den Einsatz in (n,𝛾)-Strahlungsfeldern insbesondere aus ihrem relativ geringen Füllvolumen ein weiterer Vorteil durch die Verminderung der Heizeffekte der Strahlung, da die zur Gesamtmasse proportionale Energieaufnahme im Strahlenfeld entsprechend geringer ist und somit auch weniger Kälteleistung für den Abtransport der aufgenommenen Strahlungsenergie erforderlich ist.

Die zur Verbesserung des Wärmeaustauschs bei vermindertem Füllvolumen vorgesehenen Metallamellen, welche mit den Kältemittelröhrchen zur Oberflächenvergrößerung flächenhaft verbunden sind, müssen nicht notwendigerweise als Verbindungsflächen zwischen den Röhrchen vorgesehen werden, solange eine auf andere Weise mögliche flächenhafte Konsolidierung der Röhrchen erreicht werden kann. Vorzugsweise bilden diese Metallamellen jedoch Zwischenflächen zwischen den Röhrchen, so daß die Kaltfläche insgesamt durch eine beispielsweise etwa 5o μm starke Metallmembran mit eingelassenen oder eingesetzten Röhrchen gebildet werden.

Die Röhrchen können - je nach Strömungswiderstand - mäanderförmig in der Fläche angeordnet sein oder auch eine Serie von "harfenartig" nebeneinander liegenden parallelen Röhrchen bilden, die durch Verteiler- und Sammelleitungen zusammengefaßt werden.

Die Herstellung solcher Kaltflächen erfolgt zweckmäßigerweise nach einem galvanischen Verfahren, wobei unterschiedliche Möglichkeiten gegeben sind, die durch die angefügte Zeichnung veranschaulicht werden; es zeigen

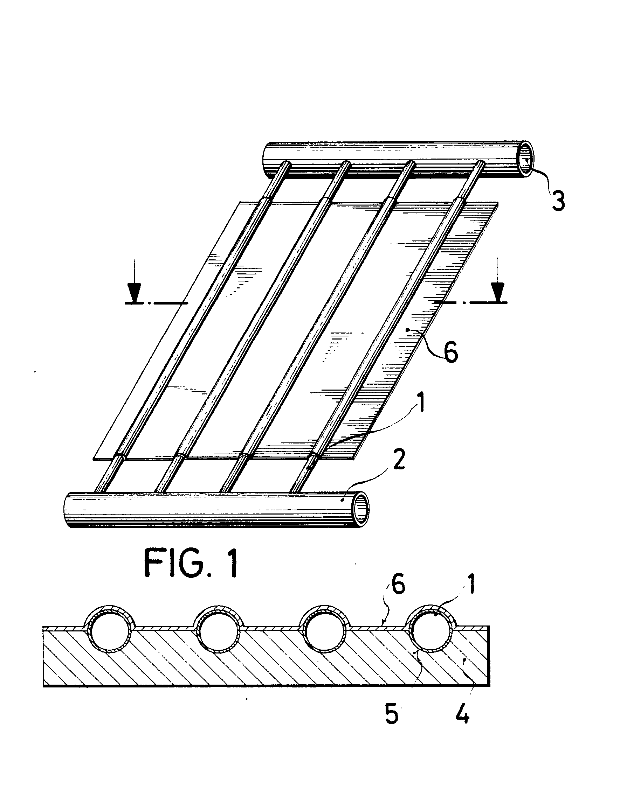

Figur 1 bis 3    das Ergebnis unterschiedlicher Verfahrensschritte der Kaltflächenherstellung

Bei der durch Figur 1 veranschaulichten Verfahrensvariante wird ein harfenähnliches Gebilde aus zueinander parallelen dünnwandigen Röhrchen 1 von kleinem Durchmesser, die an beiden Enden jeweils vakuumdicht in entsprechende Sammelrohre 2 und 3 (für den Zu- bzw. Ablauf von Kühlmittel) eingelötet oder eingeschweißt sind, auf einer elektrisch leitenden Unterlage 4 angeordnet, die mit entsprechenden Nuten 5 für die Aufnahme der Röhrchen versehen ist. Auf diese Anordnung wird auf galvanischem Wege eine gut wärmeleitende Schicht 6 (zum Beispiel aus Kupfer) aufgebracht, die als in sich geschlossene Fläche ausgebildet ist. Die leitfähige Unterlage 4 wird abschließend wieder entfernt.

Eine solche Kaltfläche kann zum Beispiel aus 4 mm Röhrchen mit o,1 mm Wandstärke bestehen, die in einem Abstand von 2o mm angeordnet sind und durch eine Galvanikschicht von etwa 5o $\mu$m zusammengehalten werden. Eine solche Kaltfläche hat eine Masse von etwa 1 kg/m$^2$ und ein Füllvolumen von etwa 6oo ml/m$^2$.

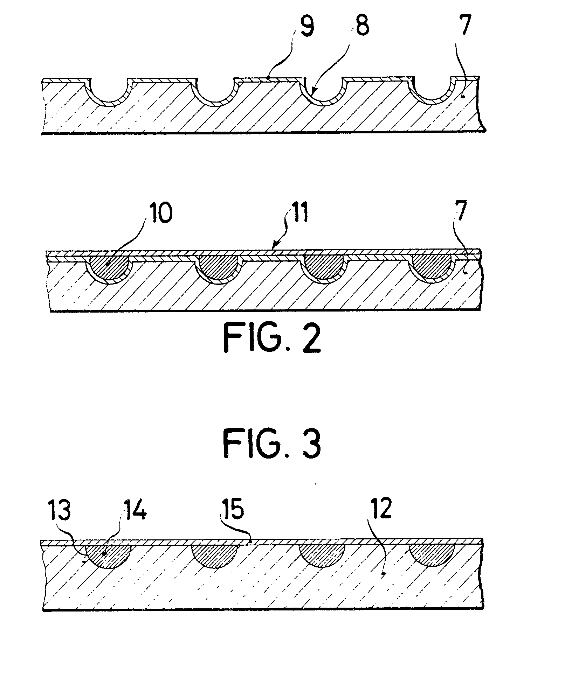

Bei der durch Figur 2 veranschaulichten Verfahrensvariante wird in eine elektrisch leitende Unterlage 7 ein gewünschtes Muster von Kanälen 8 eingraviert Die gesamte Fläche einschließlich der Kanäle wird dann mit einer in sich geschlossenen vakuumdichten Schicht 9 aus galvanisch aufgebrachtem Metall (insbesondere Kupfer) versehen. Die mit der ersten Galvanikschicht ausgekleideten Kanäle werden danach mit einer elektrisch leitenden Masse 1o mit niedrigem Schmelzpunkt gefüllt und die gesamte Anordnung erneut mit einer (zweiten)Galvanikschicht 11 vakuumdicht abgedeckt und die Füllmasse 1o dann ausgeschmolzen. Abschließend wird die elektrisch leitende Unterlage 7 entfernt. Als Anschluß für die so gebildete Struktur werden als Verteiler wirkende Elemente in der Unterlage vorgesehen und beim Aufbringen der ersten Galvanikschicht in die Struktur integriert.

Auf diese Weise wird eine Kaltfläche mit ähnlicher Masse und ähnlichem Füllvolumen wie nach der ersten

0035216

Verfahrensvariante erhalten.

Wenn die Kaltfläche insgesamt eine mechanische Funktion übernehmen und beispielsweise in Form eines Hohlkörpers Innen- oder Außendruck aufnehmen soll, so kann die bei den vorstehend beschriebenen Verfahrensvarianten vorgesehene elektrisch leitende Unterlage als Stützstruktur ausgenutzt und als metallischer Körper vorgesehen werden, und sie wird dann nicht entfernt. In diesem Fall würde sich allerdings die Abscheidung einer ersten Galvanikschicht bei der Variante 2 erübrigen und man könnte einfach, wie es durch Figur 3 veranschaulicht wird, in einem elektrisch leitfähigen Körper 12, dessen Masse und Formgebung durch etwaige auf ihn einwirkende mechanische Kräfte oder sonstige vom jeweiligen Einsatzzweck gegebene Bedingungen festgelegt sind (zum Beispiel in einem Blech von angemessener Stärke), durch Gravieren oder Formätzen Kanäle 13 vorsehen, die mit einer elektrisch leitenden niedrig schmelzenden Masse 14 gefüllt werden, woraufhin dann eine Galvanikschicht 15 aufgebracht wird. Schließlich wird die Füllmasse 14 durch Ausschmelzen entfernt.

Eine Kaltfläche der zuletzt beschriebenen Form mit unterstützender Unterlage benötigt zwar für die Abkühlung eine größere Kühlmittelmenge, jedoch wird aufgrund des sehr geringen Füllvolumens beim Betrieb mit flüssigem Helium in einem Neutronenstrahlenfeld eine zu den Varianten 1 und 2 ähnlich günstige verringerte Strahlungsenergieaufnahme er-

- 9 -

0035216

zielt (da die Energieübertragung von den Neutronen auf andere Atome durch elastische Stöße um so erheblicher wird, je geringer das Atomgewicht ist und somit beim Helium besonders ungünstig wird).

Die im vorhergehenden beschriebenen Verfahren beschränken sich nicht auf die Herstellung ebener Kaltflächen. Soweit mechanische bzw. galvanische Bearbeitungsmethoden dies gestatten, können Kaltflächen beliebiger Form zur Anpassung an den jeweiligen Verwendungszweck hergestellt werden, beispielsweise mit Falten zur Oberflächenvergrößerung versehen oder zylinderförmig gestaltet sein (wobei beispielsweise bei einer Ausführung nach Fig.3 das Blech 12 zylindrisch statt eben ausgeführt ist). Durch diese freie Formgebung ergibt sich die Möglichkeit einer Optimierung der Pumpleistung bei vorgegebenen Randbedingungen (zum Beispiel Form der Vakuumkammer, Gestalt und Größe von Saugquerschnitten etc.).

Patentansprüche

1. Kaltfläche für Kryopumpen in Form einer mit flüssigem Kältemittel, insbesondere mit flüssigem Helium beaufschlagten (gefüllten/durchströmten) (Doppel)-Wand, d a d u r c h   g e k e n n z e i c h - n e t , daß die (Doppel)-Wand durch eine Serie von untereinander in Verbindung stehenden dünnwandigen engen Röhrchen (1) gebildet wird, an die sich jeweils dünne achsparallele gut wärmeleitende Metallamellen (6) anschließen, wobei Röhrchendurchmesser, -abstand und -wandstärke sowie Lamellendicke im Hinblick auf eine Minimalisierung der Gesamtmasse der Fläche aufeinander abgestimmt und so bemessen sind, daß die Temperaturunterschiede innerhalb der Lamellen der mit flüssigem Kältemittel beaufschlagten Fläche bei maximal auftretender Wärmebelastung der- selben unter $0,1\,^{\circ}K$ bleiben.

2. Kaltfläche nach Anspruch 1, dadurch gekennzeichnet, daß der Röhrchendurchmesser zwischen etwa 3 mm und 8 mm, der Röhrchenabstand zwischen etwa 15 mm und 5o mm, die Röhrchenwandstärke in der Gegend von o,1 mm bis o,5 mm und die Lamellendicke bei etwa o,o5 mm bis o,5 mm liegt.

0035216

3. Kaltfläche nach Anspruch 1 oder 2, gekennzeichnet durch eine Serie von parallel angeordneten Röhren (1), die mit je einer Verteiler- und Sammelleitung (2,3) für flüssiges Kältemittel verbunden sind.

4. Kaltfläche nach einem der vorangehenden Ansprüche dadurch gekennzeichnet, daß die an die Röhren anschließenden Metallamellen Verbindungsstege zwischen den paralleln Röhrchen bilden.

5. Kaltfläche nach einem der vorangehenen Ansprüche, dadurch gekennzeichnet, daß die Metallamellen durch galvanische Abscheidung über die gesamte Fläche auf zumindest einer (Doppel)-Wandseite gebildet sind.

6. Kaltfläche nach Anspruch 5, dadurch gekennzeichnet, daß sowohl die Röhren als auch die Verbindungsstege durch galvanische Abscheidung entsprechend geformter Schichten gebildet sind.

7. Kaltfläche nach Anspruch 1, gekennzeichnet durch eine unterstützende elektrisch leitfähige Unterlage, in der die mit Kältemittel zu beaufschlagenden Röhren durch entsprechende Nuten und eine diese vakuumdicht überspannende Galvanikschicht gebildet sind.

8. Verfahren zur Herstellung einer Kaltfläche nach einem der vorangehenden Ansprüche, dadurch gekennzeichnet, daß man längs einer mit entsprechenden Nuten versehenen elektrisch leitfähigen Unterlage

a) enge dünnwandige Röhrchen aus gut wärmeleitendem Material vorsieht und galvanisch mit einer gut wärmeleitenden Metallschicht, insbesondere Kupferschicht, überzieht und die Unterlage entfernt oder

b) auf die mit Nuten versehene leitfähige Unterlage eine erste Galvanikschicht aus gut wärmeleitendem Material aufträgt, anschließend die Nuten mit einer elektrisch leitenden, niedrigschmelzenden Masse füllt, eine zweite gut wärmeleitende Galvanikschicht aufbringt und die Füllmasse ausschmilzt und die Unterlage entfernt oder

c) elektrisch leitende niedrigschmelzende Füllmasse in die Nuten einbringt und auf den mit füllmassegefüllten Nuten versehenen metallischen Körper eine gut wärmeleitende Galvanikschicht aufträgt und die Füllmasse ausschmilzt.

0035216

FIG. 1

FIG. 2

FIG. 3